# EUROPÄISCHE PATENTANMELDUNG

(11) **EP 0 532 112 A2**
(43) Veröffentlichungstag der Anmeldung: **17.03.1993**
(21) Anmeldenummer: 92202732.1
(22) Anmeldetag: 09.09.1992
(51) Int. Cl.: G11B 15/44, G11B 15/29

(54) **Magnetbandkassettengerät mit einem Laufwerk für Magnetbandkassetten (Richtungsumkehrmechanismus)**

(30) Priorität: 13.09.1991 DE 4130403
(71) Anmelder: Philips Patentverwaltung GmbH, 22335 Hamburg (DE); Philips Electronics N.V., 5621 BA Eindhoven (NL)
(72) Erfinder: Kunze, Norbert, c/o Philips Patentverwaltung GmbH, W-2000 Hamburg 1 (DE); Weber, Georg, c/o Philips Patentverwaltung GmbH, W-2000 Hamburg 1 (DE)
(74) Vertreter: von Laue, Hanns-Ulrich, Dipl.-Ing.

(57) **Zusammenfassung**

Magnetbandkassettengerät mit einem Laufwerk für Magnetbandkassetten, das für den Spielbetrieb mit einer ersten und einer gegenläufigen zweiten Bandlaufrichtung ausgelegt ist, wobei die Umschaltung von der ersten Bandlaufrichtung in die gegenläufige zweite Bandlaufrichtung mittels eines Umschaltmechanismus (03) erfolgt, mit dem das Wickelgetriebe (09) zwischen einem Spielmodus im Vorwärtsbetrieb und zu einem Spielmodus im Reversebetrieb umschaltbar ist, und zum Umschaltmechanismus 03 ein Schalthebel (29) gehört, der von einer ersten Stellung für die erste Spielrichtung in eine zweite Stellung für die gegenläufige zweite Spielrichtung umlegbar ist, wobei der Schalthebel (29) mittels Schalträdern (31a, 31b) umschaltbar ist, die mit ihren Zähnen mit zugeordneten Verzahnungen (3a, 3b) der Schwungscheiben bzw. Tonwellen (3) in Eingriff bringbar sind, um den Schalthebel (29) mittels an ihnen vorgesehener Stellglieder (31bc, 31ac) von der Vorgabestellung für eine Spielrichtung in die Vorgabestellung für die gegenläufige andere Spielrichtung umzuschalten.

## Beschreibung

Die Erfindung bezieht sich auf ein Magnetbandkassettengerät Bit einem Laufwerk für Magnetbandkassetten, das für den Spielbetrieb mit einer ersten und einer gegenläufigen zweiten Bandlaufrichtung ausgelegt ist, wobei die Umschaltung von der ersten Bandlaufrichtung in die gegenläufige zweite Bandlaufrichtung mittels eines Umschaltmechanismus erfolgt, mit dem das Wickelgetriebe zwischen einem Spielmodus im Vorwärtsbetrieb und zu einem Spielmodus im Reversebetrieb umschaltbar ist, und zum Umschaltmechanismus ein Schalthebel gehört, der von einer Stellung für die erste Spielrichtung in eine zweite Stellung für die gegenläufige zweite Spielrichtung umlegbar ist.

Ein Magnetbandgerät mit einem derartigen Umschaltmechanismus ist aus der EP 290 072 A2 (PHD 87-085 EP) bekannt. Der Schalthebel besteht dabei aus einem um die Achse eines zentralen Antriebsrades schwenkbaren Schwenkarm, an dem ein Übertragungszahnrad gelagert ist. Zwischen der Achse des Übertragungszahnrades und der Achse des zentralen Antriebsrades greift ein zweiarmiger Stellhebel an, dessen freies Ende von einer Stellvorrichtung beaufschlagt wird und der zwischen dem Angriffspunkt am Schwenkarm und seinem freien Ende an einem Kipplager gelagert ist. Die Stellvorrichtung hat einen Schieber, der das freie Ende des Stellhebels zwischen einer ersten und einer zweiten Endstellung verschieben kann, um damit das Übertragungszahnrad von einer ersten Stellung für die erste Spielstellung in eine zweite Stellung für die gegenläufige zweite Spielstellung umzuschalten. Der Einsatz eines Schiebers mit seiner Stellvorrichtung ist aufwendig.

Aus der DE 36 17 278 C2 ist es bekannt, zm Umschalten von Vorlauf auf Rücklauf ein Schaltrad einzusetzen, das längs seines Drehweges mehrere Schaltstellungen aufweist, von denen eine die Umschaltstellung ist. Das Schaltrad kämmt mit einem auf einer Tonwelle angeordneten Zahnrad und hat pro Schaltstellung ein zahnloses Segment. Das Schaltrad hat Steuerkurven, die von um die Schaltachse schwenkbaren Hebeln für Vorlauf, Rücklauf sowie Umschaltung abgetastet werden. Das Einwirken auf die Laufwerksumschaltung bzw. auf deren Funktionsweise ist nicht erkennbar.

Es ist Aufgabe der Erfindung, ein Magnetbandkassettengerät der eingangs erwähnten Art zu schaffen, bei dem mit Hilfe von nur drehenden bzw. schwenkenden Bauteilen eine Umstellung von der einen in die andere Bandlaufrichtung möglich ist.

Die gestellte Aufgabe ist erfindungsgemäß dadurch gelöst, daß der Schalthebel mittels Schalträdern umschaltbar ist, die mit ihren Zähnen mit zugeordneten Verzahnungen der Schwungscheiben bzw. Tonwellen in Eingriff bringbar sind, um den Schalthebel mittels an ihnen vorgesehener Stellglieder von der Vorgabestellung für eine Laufrichtung in die Vorgabestellung für die gegenläufige andere Laufrichtung umzuschalten.

Die Umschaltung erfolgt mithin mit Hilfe von Zahnrädern, die an der Grundplatte des Laufwerkes definiert angeordnet werden, entweder durch Montage oder durch ein Anspritzen und nachträgliches beweglich machen bis zur Ausbildung einer Gleitlagereigenschaft im Rahmen einer Nachbehandlung. Der Aufbau ist technisch einfach und unempfindlich, weil schiebend gelagerte Stellteile ebenso wie Gelenkstangen entfallen.

In weiterer Ausgestaltung der Erfindung ist dabei vorgesehen, daß die Schalträder mit zahnlosen Segmenten versehen sind, die im jeweiligen Spielmodus (vorwärts oder reverse) im Bereich der Schwungscheibenverzahnungen gehalten werden, und daß zum Umlegen des Schalthebels das das Umlegen bewirkende Schaltrad zum Drehen freigegeben wird, wobei eine Stellfeder das betreffende Schaltrad verdreht, bis die Schaltradverzahnung mit der Schwungscheibenverzahnung in Eingriff kommt, wodurch die Schwungscheibenverzahnung in die Lage versetzt wird, das betreffende Schaltrad zu drehen, bis ein an ihm vorgesehener Stellstift den Schalthebel von seiner Stellung im einen Spielmodus (vorwärts oder reverse) in seine Stellung für den anderen Spielmodus (reverse oder vorwärts) über einen durch Federkraft vorgegebenen Übertotpunkt umgelegt hat. Der Übertragungsweg Schwungscheibenzahnrad/Schaltrad/Schalthebel ist bauteilmäßig einfach und zuverlässig.

In Weiterbildung dieses erfinderischen Merkmales ist vorgesehen, daß die Schalträder mit Stoprippen versehen sind, die mit einer Anschlagkante eines Starthebels derart zusammenwirken, daß die Stoprippen im jeweiligen Spielmodus von der Anschlagkante so blockiert sind, daß die zahnlosen Segmente vor den Schwungscheibenverzahnungen liegen, und daß der Starthebel bei seinem von einem Umschaltkommando ausgelösten Verstellen die Stoprippe des Schaltrades, das den Umschaltvorgang vornehmen soll, zum Verdrehen des betreffenden Schaltrades freigibt. Der die Umschaltung einleitende Starthebel gibt also jeweils das die Umschaltung vornehmende Schaltrad zum Ausführen des Umschaltvorganges frei und blockiert gleichzeitig das andere Schaltrad. Nach dem Umschalten werden wieder beide Schalträder von dem Starthebel blockiert. Die Enden der Schaltrippen, die mit der Anschlagwand des Starthebels zusammenwirken, sind dabei derart angeordnet, daß die zahnlosen Segmente der Schalträder beim Anliegen der Enden an der Anschlagwand vor den Schwungscheibenverzahnungen liegen.

Das Umschalten des Schalthebels wird zunächst, wenn kein besonderes Umschaltkommando kommt, durch die gegenseitige Blockierung von Reversehebel und Starthebel verhindert. Kommt jedoch das Kommando zum Umlegen des Umschalthebels, dann wird zunächst einmal die Drehblockierung des Starthebels aufgehoben, der dann seinerseits die Drehblockierung des die Umschaltung vornehmenden Schaltrades aufhebt.

In weiterer Ausgetaltung der Erfindung ist hierzu vorgesehen, daß der Starthebel gegen ein Einleiten des Umschaltvorganges gesichert ist mit Hilfe einer Steuerkontur eines Reversehebels, in der sich der Starthebel zu seinem Verschwenken nur bewegen kann, wenn der Reversehebel von einem Tastenkommando oder von einem Steuerhebel, der das Bandende detektieren kann, aus einer Arretierstellung gegenüber dem Starthebel heraus bewegt worden ist. Diese gegenseitige Arretierung ist wichtig, um bei den durch Federn vorgespannt zusammenwirkenden Hebeln, dem Reverse- und dem Starthebel, nach dem Lösen der Arretierung zu einem schnellen Einleiten des Reversiervorganges zu kommen.

Nach einer weiteren Ausgestaltung der Erfindung ist vorgesehen, daß der Reversehebel innerhalb der Steuerkontur Fangkanten aufweist, hinter die eine Steuernase des Starthebels in den Schaltendestellungen fallen kann, um den Starthebel zu blockieren, und daß die Steuernase die Fangkanten verläßt, wenn der Steuerhebel den Reversehebel von der jeweils beaufschlagten Fangkante so wegdrückt, daß die Steuernase in Führungsbahnen einläuft, die dem unter der Vorspannung der Schalthebelfeder stehenden Starthebel das Verschwenken gestattet, damit dieser das gewünschte Schaltrad freigeben kann. Erst durch das Lösen der Arretierung kann also der Umschaltvorgang eingeleitet werden, wobei die Schalthebelfeder, die den Umschalthebel jeweils in seine Endlage drückt, nach dem Überschreiten des Übertotpunktes das Umwerfen des Umschalthebels vollendet.

In Weiterbildung dieser Ausführungsform ist vorgesehen, daß die Führungsbahnen von den Fangkanten zu weiteren Fangkanten verlaufen, die die Schwenkbewegung des Starthebels begrenzen, indem die Steuernase an ihnen einen Anschlag findet. Die Steuerkontur blockiert damit den Starthebel und begrenzt ihm, wenn er sich drehen kann, den Schwenkweg.

Nach einer weiteren Ausgetaltung der Erfindung ist vorgesehen, daß der um eine Drehachse schwenkbare Steuerhebel einen Tastarm aufweist, der mit einem Taster eine Stirnfläche des Reverserades abfährt, und einen Schaltarm mit einem Nocken aufweist, der bei sich drehendem Reverserad und wickelndem Magnetband eine exzentrische Stellkontur des Primärkupplungsrades pumpend abfährt und der bei stillstehendem Reverserad infolge eines Bandstopps auf eine Schaltkontur aufläuft, die den Steuerhebel derart verstellt, daß der Reversearm des Steuerhebels den Reversehebel zum Freigeben der Steuernase verstellt. Bei Stillstand des Bandes sorgt damit der Steuerhebel für eine Aufhebung der Blockierung des Starthebels.

Die Erfindung wird anhand der Zeichnungen näher erläutert. Es zeigen:
Fig. 1 ein Schaubild eines Laufwerkes für Magnetbandkassetten in einem Magnetbandkassettengerät in der Vorwärtsspielrichtung (NOR),
Fig. 2 einen Schnitt durch das Wickelgetriebe des Laufwerkes,
Fig. 3 ein Schaubild des Laufwerkes nach Fig. 1 in der Rückwärtsspielrichtung (REV),
Fig. 4a bis 4d den Umschaltmechanismus in verschiedenen Funktionsstellungen zusammen mit den sie betätigenden Hebeln,
Fig. 4e ein Detail aus den Fig. 4a bis 4d, welches das Zusammenwirken eines Reversehebels mit einem Starthebel darstellt,
Fig. 5 das Wickelgetriebe in der Schaltstellung für schnellen Vorlauf im Vorwärtsspielbetrieb (SVL-NOR) und schnellen Vorlauf im Rückwärtsspielbetrieb (SVL-REV),
Fig. 6 das Wickelgetriebe in der Schaltstellung für schnellen Vorlauf in Rückwärtsspielbetrieb (SVL-REV) und für schnellen Rücklauf im Vorwärtsspielbetrieb (SVL-NOR),
Fig. 7 die Stellung des Mechanismus im Reverse-Play-Betrieb,
Fig. 8 das Zusammenwirken der Teile des Umschaltmechanismus während des manuellen Reversiervorganges.

### Antriebsprinzip

Der Wickelantrieb des für Vorwärts- und Rückwärtsbetrieb eingerichteten Laufwerkes erfolgt immer vom Tonwellenmotor über ein Antriebszwischenrad auf eine einzige zentral angeordnete Spielkupplung mit Kupplungsprimär- und -sekundärrad, welche sich ständig im Uhrzeigersinn dreht. Ein Zwischengetriebe schaltet das Drehmoment des Kupplungssekundärrades je nach Wiedergaberichtung auf den entsprechenden Vorwärts- oder Rückwärts-Wickelteller. Der Tonwellenantrieb erfolgt vom Tonwellenmotor über eine Peese auf zwei entgegengesetzt drehende Schwungscheiben. Die Schwungscheiben tragen Verzahnungen, von denen die Bewegungen für die Reverseschaltvorgänge abgeleitet werden. Dies bedeutet, daß der Wickel- und der Tonwellenantrieb weitgehend entkoppelt sind.

Der Antrieb der Wickel erfolgt auch im Schnellauf über das Zwischengetriebe, wobei die Spielkupplung durch ein Kurzschlußrad überbrückt wird, um das zur Verfügung stehende Spulmoment zu erhöhen. Es existieren weder eine Schnellspulkupplung noch ein spezielles Schnellspulgetriebe.

Zur Verkürzung der Schnellspulzeit trägt das Kurzschlußrad zwei unterschiedliche Verzahnungen, die bei gleichem Achsabstand mit verschieden großen Verzahnungen von Primär- unf Sekundärkupplungsrad kämmen, wodurch im Schnellaufbetrieb das Sekundärkupplungsrad schneller dreht als der Primärkupplungsrad. Dadurch, daß kein extra Schnellaufgetriebe vorgesehen ist, muß grundsätzlich zum schnellen Rücklauf reversiert werden und nach dessen Beendigung durch erneutes Reversieren die alte Spielrichtung wieder eingestellt werden. Rücklauf heißt also generell Vorlauf in der anderen Richtung.

Um trotz fehlender Schnellaufkupplung ein Durchrutschen der Peese am Bandende zu verhindern, ist das Getriebe so ausgelegt, daß bei Erreichen einer Grenzkraft das austreibend ausgelegte Getriebe von dem jeweiligen Wickel wegschwenkt, wobei diese Schwenkbewegung zur Beendigung des Spulbetriebes ausgenutzt wird.

### Wickelgetriebe 09 Antrieb in Vorwärtsspielrichtung (NOR-Spielbetrieb

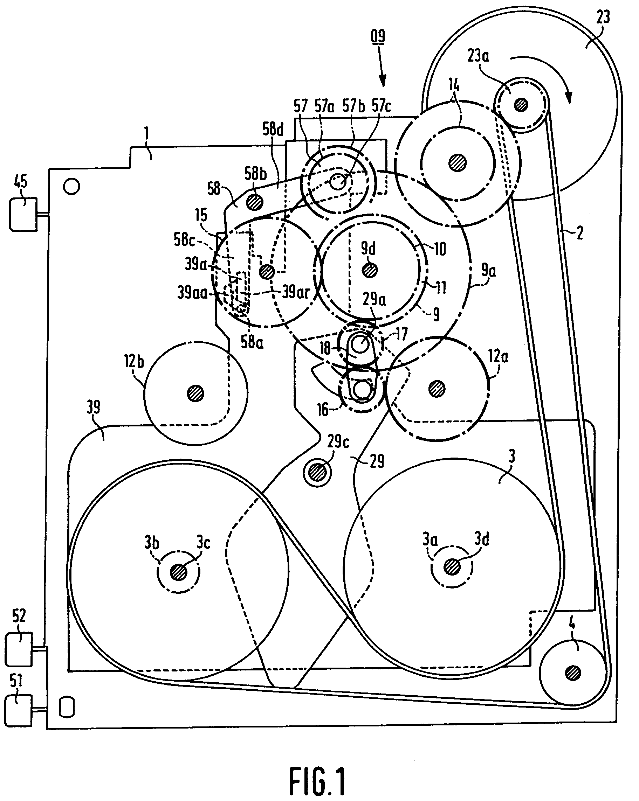

Das Schaubild nach Fig. 1 zeigt auf einem Chassis 1 den Antrieb der bewegten Teile des Laufwerkes. Ein Motor 23 treibt über eine Peese 2 in entgegengesetzten Richtung Schwungscheiben 3 für die Tonwellen 3c für Rückwärtsspielbetrieb (REV) und 3d für Vorwärtsspielbetrieb (NOR) an. Die Tonwellen 3c, 3d sind mit Verzahnungen 3a und 3b versehen. Die Peese 2 ist über eine Umlenkrolle 4 geführt.

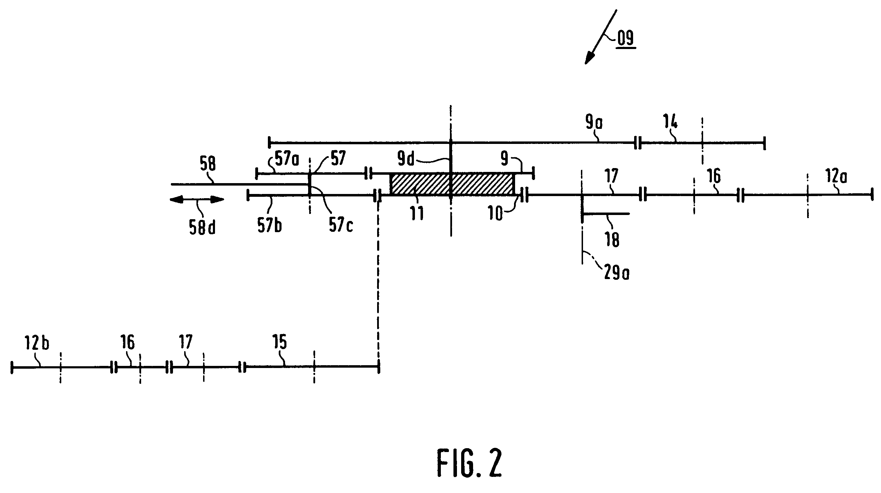

Dem Antrieb des Vorwärtswickeltellers 12a für den Vorwärtsspielbetrieb (NOR) und des Rückwärtswickeltellers 12b für Rückwärtsspielbetrieb (REV) dient ein Wickelgetriebe 09, welches ebenfalls von dem Motor 23 angetrieben wird und welches in Fig. 2 im Schnitt dargestellt ist. Der Motor 23 ist nur in einer Richtung umlauffähig. Der Motor 23 treibt hierzu mit seiner Welle 23a über ein Antriebszwischenrad 14 die Spielkupplung mit einem Antriebszahnkranz 9a eines Primärkupplungsrades 9 an, welches sich - solange sich die Motorwelle 23a dreht - ständig um eine Welle 9d dreht. Das Primärkupplungsrad 9 treibt ein konzentrisch zu ihm angeordnetes Sekundärkupplungsrad 10 über eine drehmomentübertragende Schlupfkupplung 11 an.

Mit dem Sekundärkupplungsrad 10 ist ein Zwischenrad 17 in Eingriff, das um eine Achse 29a eines Schalthebels 29 drehbar ist. Der Schalthebel 29, der in einer Endstellung für Vorwärtsbetrieb (NOR) oder in einer Endstellung für Rückwärtsbetrieb (REV) stehen kann und in diesen Endlagen festgelegt ist, steht dabei im Uhrzeigersinn belastet in der NOR-Stellung. Das Zahnrad 17 kämmt mit einem Zahnrad 16, das bei der Darstellung nach Fig. 1 und 2 mit dem NOR-Wicketeller 12a im Eingriff ist.

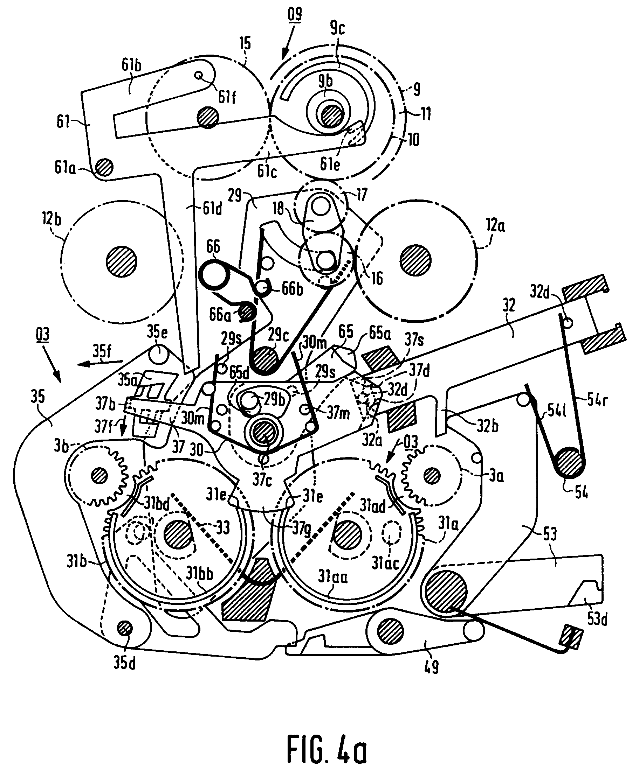

Die Verzahnungskräfte wirken auf die einzelnen Zahnräder so, daß die Paarung NOR-Wickelteller 12a/Schwenkrad 16 einziehend und die Paarung Kupplungssekundärrad 10/Zwischenrad 17 ausdrückend sind. Der Umschalthebel 29 ist in der NOR-Stellung nach Fig. 1 durch eine Schalthebelfeder 66 (Fig. 4a) im Uhrzeigersinn belastet. Die Belastung ist dabei so groß, daß der Umschalthebel 29 entgegen den Verzahnungskräften nach rechts, also im Uhrzeigersinn, in Richtung auf den NOR-Wickelteller 12a gedrückt wird.

Zu dem Wickelgetriebe 09 gehört ein Kurzschlußdoppelzahnrad 57, dessen Welle 57c auf einem doppelarmigen, um eine Achse 58b schwenkbaren Kurzschlußradhebel 58 angeordnet ist. Wie ein Doppelpfeil 58d in Fig. 2 zeigt, kann das Kurzschlußrad 57 mit dem Primärkupplungsrad 9 und dem Sekundärkupplungsrad 10 derart in Eingriff oder außer Eingriff gebracht werden, daß beim Eingriff die Kupplung 11 kurzgeschlossen und außer Eingriff die Kupplung wirksam ist. Mit Hilfe dieses Kurzschlußrades 57 können die NOR- und REV-Wickelteller 12a, 12b zum Schnellspulen auf Schnellauf geschaltet werden. Um die höhere Schnellspulgeschwindigkeit zu erhalten, ist das Übersetzungsverhältnis so gewählt, daß die Zähnezahl des Primärkupplungszahnrades 9 größer ist als die Zähnezahl des Sekundärkupplungszahnrades 10 und daß die Zähnezahl des mit dem Zahnrad 9 kämmenden Kurzschlußrades 57a kleiner ist als die Zähnezahl des mit dem Sekundärkupplungsrad 10 kämmenden Kurzschlußrades 57b

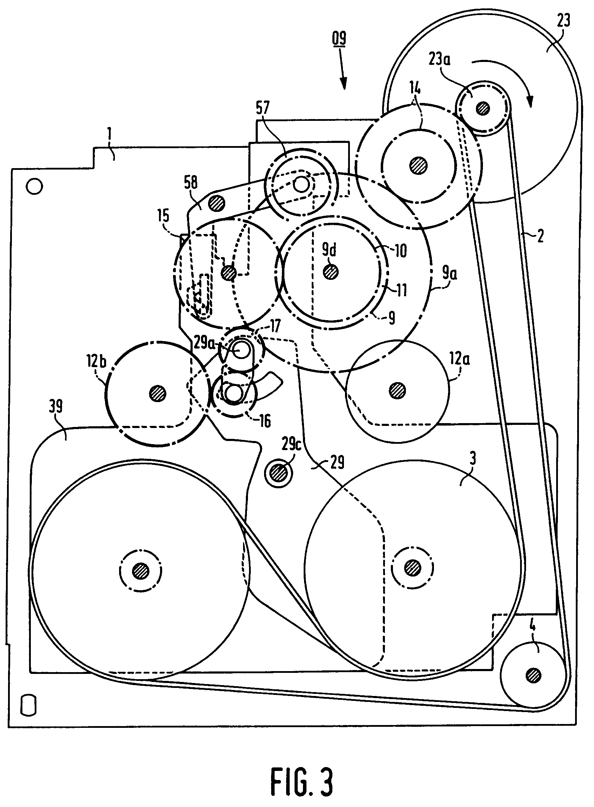

Weiterhin gehört zu dem Wickelgetriebe 09 ein Reverserad 15, das ständig mit dem Sekundärkupplungsrad 10 kämmt. Dieses Reverserad kann beim Reversebetrieb, wie er in Fig. 3 dargestellt ist, über das Zwischenrad 17 und das Schwenkrad 16 den REV-Wickelteller 12b antreiben.

Während an einem Arm des doppelarmigen Kurzschlußhebels 58 das Kurzschlußrad 57 angeordnet ist, trägt der andere Arm 58c des Kurzschlußhebels 58 einen Stellstift 58a, der in einer Leitkontur 39a des Kopfträgers 39 geführt ist. Diese Leitkontur besteht aus einer als Rundlaufführungsbahn ausgebildeten Leitkontur 39a mit einem in der Zeichnung nach links ausgebogenen, schräg ansteigenden linken Bahnteil 39aa und einem geradlinigen rechten Rücklaufbahnteil 39ar, die an den Enden miteinander verbunden sind. In der Leitkontur 39a kann der Stellstift 58a umlaufen. Fällt der Kopfträger 39 von der Spielstellung in die Auswerfstellung, dann durchläuft der Stellstift 58a den linken Bahnteil 39aa, wobei der Stellstift 58a nach links gezogen wird und das Kurzschlußrad 57 gegen das Primär- und Sekundärkupplungsrad 9 und 10 schwenkt. Bleibt der Kopfträger in dieser Stellung stehen, dann schließt das Kurzschlußrad 57 das Primär- und Sekundärkupplungsrad 9, 10 kurz. Da die Übersetzung vom Primärkupplungsrad 9 zum Sekundärkupplungsrad 10 über das Kurzschlußrad so gewählt ist, daß das Sekundärkupplungsrad 10 mit größerer Geschwindigkeit umlaufen kann, läßt sich über diese Getriebeanordnung ein Schnellauf der Wickelteller 12a,12b erreichen. Dieser Schnellauf kann ein Schnellvorlauf (SVL) oder ein Schnellrücklauf (SRL) sein und wird später weiter beschrieben.

### Antrieb in Rückwärtsspielrichtung (REV-Spielbetrieb)

Während in Fig. 1 der Spielbetrieb in Vorwärtsrichtung dargestellt ist, zeigt Fig. 3 den Spielbetrieb in Rückwärts-(REV)-Richtung. Dabei ist in Fig. 3 zu erkennen, daß der um die Achse 29a schwenkbare Schalthebel 29 entgegen dem Uhrzeigersinn verschwenkt ist. Der zum Verschwenken eingesetzte Umschaltmechanismus 03 wird später erläutert. In dieser Stellung kämmt das Zwischenrad 17 mit dem Reverserad 15.

Damit erfolgt der Antrieb des REV-Wickeltellers 12b in der REV-Richtung von dem Motor 23 über dessen Welle 23a, das Antriebszwischenrad 14 und den Antriebskranz 9a des Primärkupplungsrades 9, welches ständig in gleichbleibender Richtung im Uhrzeigersinn dreht. Das Primärkupplungsrad 9 treibt über die Reibkupplung 11 das Sekundärkupplungsrad 10 an. Das Sekundärkupplungsrad 10 treibt seinerseits das Reverserad 15 an, welches dann über das Zwischenrad 17 und das Schwenkrad 16 den REV-Wickelteller 12b im Uhrzeigersinn dreht.

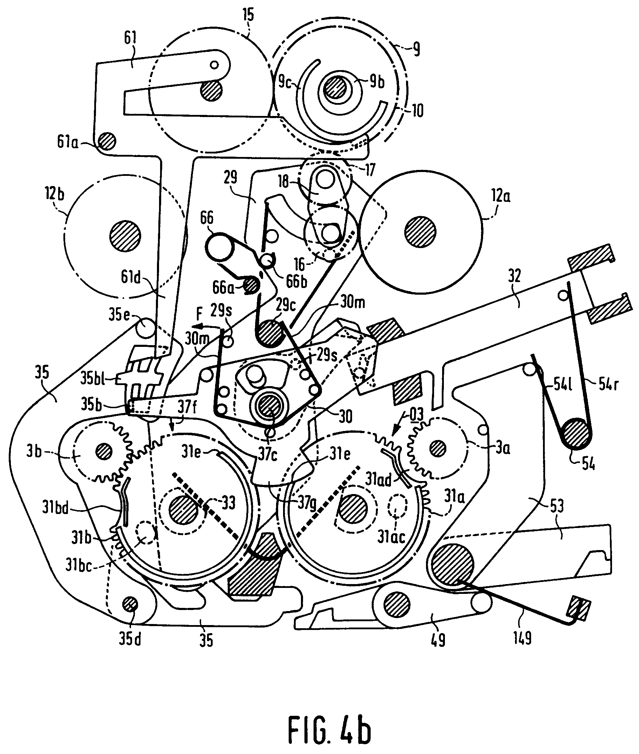

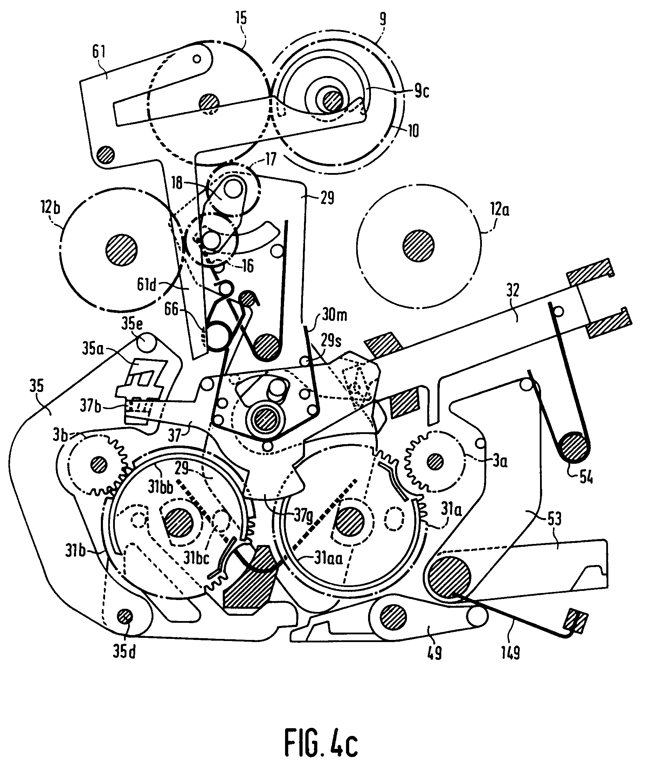

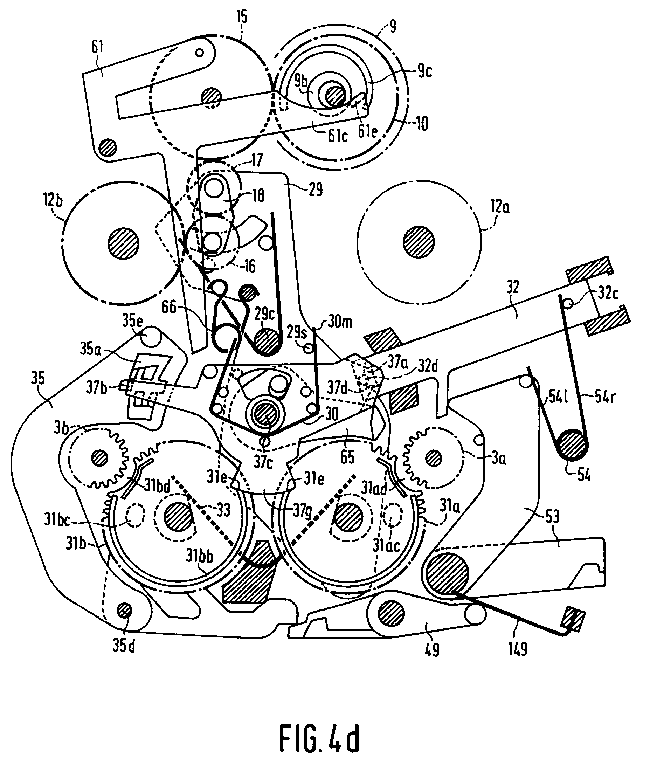

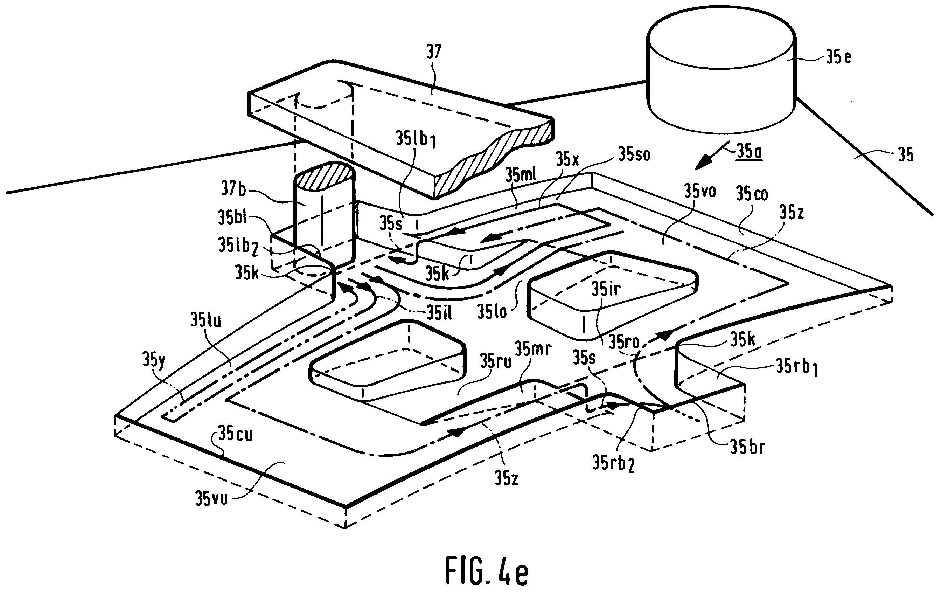

Die Verzahnungskräfte auf die einzelnen Zahnräder wirken, in diesem Fall des REV-Betriebes, so, daß die Paarung REV-Wickelteller 12b/Schwenkrad 16 einziehend und die Paarung REV-Rad 15/Zwischenrad 17 ausdrückend ist. Der Schalthebel 29 ist durch eine Schalthebelfeder 66 (Fig. 4) entgegen dem Uhrzeigersinn belastet. Die belastende Kraft ist dabei so hoch, daß der Schalthebel 29 entgegen den Verzahnungskräften nach links gedrückt wird.

In dem REV-Spielbeterieb nach Fig. 3 ist das Kurzschlußrad 57 von dem Primärkupplungsrad 9 und dem Sekundärkupplungsrad 10 abgehoben, so daß beide Kupplungsräder nur über die Kupplung 11, also mit Schlupfmöglichkeit miteinander in Verbindung stehen.

### Automatisches Reversieren (Fig. 4a bis 4e)

Zum Übergang von der einen Spielrichtung nach Fig. 1 in die andere Spielrichtung nach Fig. 3 muß der Antrieb reversiert werden. Dieser Reversiervorgang erfolgt automatisch während des Spielbetriebes oder des Bandschnellaufes jeweils am Bandende, wenn das Band stehen bleibt. Das Reversieren ist aber auch durch Tastendruck durchführbar. Dies wird später unter manuellem Reversieren beschrieben. Im folgenden wird der Reversiervorgang am Bandende bei Bandstillstand im Vorwärtsbetrieb (NOR) beschrieben; er ist in den Fig. 4 bis 4e dargestellt.

### Detektionsmechanismus für das Reversieren im Spiel- und Schnellspulbetrieb

Der Detektionsmechanismus wird anhand der Fig. 4a erläutert, die den Schalthebel 29 in der NOR-Spielrichtung zeigt. Es handelt sich also in Fig. 4a um die Detektierung eines Bandstillstandes im Spielbetrieb. Das Kupplungssekundärrad 10 treibt dabei über das Zwischenrad 17 und das Schwenkrad 16 den NOR-Wickelteller 12a an. Es ist ein Steuerhebel 61 vorgesehen, der um eine Drehachse 61a verschwenkbar ist.

Der Steuerhebel 61 weist einen Tastarm 61b, einen Schaltarm 61c und einen Reversearm 61d auf. Der Tastarm 61b trägt einen Taster 61f, der ständig über eine Stirnfläche eines Reverserades 15 schleift und somit ein dem Uhrzeigersinn entgegengesetzt gerichtetes Drehmoment auf den Steuerhebel 61 ausübt. Der Schaltarm 61c trägt einen Nocken 61e, der ständig gegen eine Stellkontur 9b am Primärkupplungsrad 9 gedrückt wird, solange das Reverserad 15 umläuft. Infolge einer exzentrischen Lage der Stellkontur 9b macht der Steuerhebel 61 dabei ständig eine Pumpbewegung.

Läuft nun das nicht dargestellte Magnetband in der nicht dargestellten Kassette bis zum Bandende und bleibt stehen, dann bleibt auch der NOR-Wickelteller 12a stehen und ebenso das mit ihm gekuppelte Sekundärkupplungsrad 10. Das Primärkupplungsrad 9 läuft weiter. Durch den Stillstand des Sekundärkupplungsrades 10 wird auch das Reverserad 15 angehalten. Das weiterlaufende Primärkupplungsrad 9 dreht nun, da das Reverserad 15 nicht mehr bestrebt ist, den Taster 61f entgegen dem Uhrzeigersinn zu belasten, den Steuerhebel 61 und dessen Schaltarm 61c im Uhrzeigersinn. Die Entlastung kommt zustande, weil infolge des Stillstandes des Reverserades 15 kein Rückstellmoment auf den Steuerhebel 61 ausgeübt wird. Der Schaltarm 61c des Steuerhebels 61 verläßt nun die Stellkontur 9b des Primärkupplungsrades 9 und gerät in den Bereich einer Schaltkontur 9c. Der Schaltarm 61c überläuft die Schaltkontur 9c und verschwenkt den Steuerhebel 61 im Uhrzeigersinn. Dadurch stößt der Reversearm 61d des Steuerhebels 61 gegen einen Nocken 35e eines Reversehebels 35 (Fig. 4a) und verschwenkt diesen um dessen Drehachse 35d entgegen dem Uhrzeigersinn in Richtung eines Pfeiles 35f. Damit ist der Reversiervorgang eingeleitet. Bevor der weitere Ablauf des Reversierens beschrieben wird, wird erst der Aufbau eines Umschaltmechanismus 03 beschrieben.

### Umschaltmechanismus 03 zum Reversieren des Laufwerkes

Fig. 4a bis 4e zeigen den Umschaltmechanismus mit zwei Schalträdern 31a, 31b, einer Stellfeder 33, dem um die Drehachse 35d schwenkbaren Reversehebel 35, einem um eine Drehachse 37c schwenkbaren Starthebel 37, einem ebenfalls um die Drehachse 37c schwenkbaren Stellhebel 65 sowie dem Schalthebel 29 in der Stellung für NOR-Spielbetrieb im Übergang zum REV-Spielbetrieb. Der um die Achse 29c schwenkbare Schalthebel 29 hat einen Bolzen 29b, der durch ein Langloch 65d des Stellhebels 65 hindurchgreift. Der Stellhebel 65 ist damit vom Schalthebel 29 verstellbar. Der Starthebel 37 wird durch eine von der Schalthebelfeder 30 herrührende Kraft F (Richtungspfeil 37f) zu einem Verschwenken entgegen dem Uhrzeigersinn belastet. Ein Verschwenken des Starthebels 37 wird aber verhindert, da eine an ihm vorgesehene Steuernase 37b von einer Fangtasche 35bL (Fig. 4e) der Steuerkontur 35a am Reversehebel 35 arretiert ist.

Der Reversehebel 35 ist von einer nicht dargestellten Übertotpunktfeder belastet. Diese Übertotpunktfeder wirkt wie folgt: Bei dem Starten des Reversierens von dem NOR-Betrieb in den REV-Betrieb wird der Übertotpunkt nicht überwunden. Der Reversehebel 35 federt also im Uhrzeigersinn zurück. Das gilt sowohl beim Übergang vom NOR-Betrieb in den REV-Betrieb als auch beim Übergang vom REV-Betrieb in den NOR-Betrieb. Die Ausnahme, bei der diese Übertotpunktfeder ihren Übertotpunkt überschreitet, bildet der schnelle Rücklauf (SRL), zu dem das Wickelgetriebe reversiert wird. Beim Drücken der Taste für schnellen Rücklauf (SRL) wird der Übertotpunkt überwunden, und der Reversehebel 35 ist nun entgegen dem Uhrzeigersinn belastet. Der Starthebel 37 hat, vorgegeben durch die Kraftrichtung 37f der auf ihn wirkenden Schalthebelfeder 30, das Bestreben, sich aus seiner Mittelstellung entgegen dem Uhrzeigersinn zu verdrehen.

Zum besseren Verständnis werden der Aufbau und das Zusammenwirken von Reversehebel 35 und Starthebel 37 in Fig. 4e vorgezogen erläutert. Der Starthebel 37 weist eine Steuernase 37b auf, die mit einer Steuerkontur 35a des Reversehebels 35 zusammenwirkt, indem sie diese Steuerkontur 35a abfährt. Die Steuerkontur 35a weist Fangtaschen 35bL und 35bR auf, die in entgegengesetzten Richtungen angeordnet und aufeinander zu geöffnet sind. Die Öffnungen sind mit 35iL und 35iR bezeichnet. Die Fangtasche 35bL für NOR-Betrieb hat eine Fangkante 35Lb₁ und dieser gegenüber eine Fangkante 35Lb₂. Von der Öffnung 35iL der Fangtasche 35bL zweigen in der Zeichnung nach oben eine obere linke Führungsbahn 35LO und eine untere linke Führungsbahn 35LU ab. Von der Öffnung 35iR zweigen in der Zeichnung eine obere rechte Führungsbahn 35RO und eine untere rechte Führungsbahn 35RU ab. Die oberen Führungsbahnen 35LO und 35RO sind über eine obere Verbindungsbahn 35VO verbunden. Die unteren Führungsbahnen 35LU und 35RU sind mittels einer unteren Verbindungsbahn 35VU verbunden. Die Verbindungsbahnen verbinden damit die linke Hälfte der Steuerkontur 35a mit der rechten Hälfte der Steuerkontur 35a. Die Verbindungsbahnen 35VO und 35VU haben Fangkanten 35cO und 35cU, die sie nach außen begrenzen. Parallel zur oberen Führungsbahn 35LO verläuft eine erste schräge Auflauffläche 35mL, die vom niedrigen Niveau des Bodens 35sO ansteigt zur Oberkante der oberen linken Fangkante 35Lb₁. Parallel zur unteren Führungsbahn 35RU verläuft eine zweite schräge Auflauffläche 35mR, die an der Oberkante der unteren rechten Fangkante 35Rb₂ ausläuft.

Die Steuernase 37b kann entgegen dem Uhrzeigersinn längs einer strichpunktpunktierten Linie (-..-.. -; 35y) durch die untere linke Führungsbahn 35LU bis zur unteren Verbindungsbahn 35VU laufen. Ebenso kann die Steuernase 37b aber auch auf der linken Seite der Steuerkontur 35a im Uhrzeigersinn in einer gestrichelt dargestellten Kurve (---; 35x) aus der linken Fangtasche 35bL über die linke obere Führungsbahn 35LO und die obere linke schräge Fläche 35mL in die Fangtasche 35bL zurücklaufen.

In der NOR-Spielstellung liegt die Steuernase 37b, wie Fig. 4e zeigt, an der Fangkante 35Lb₂ an. Um das Laufwerk in dem Betriebsmodus für schnellen Rücklauf im Vorwärtsbetrieb (SRL-NOR) zu schalten, verläßt die Steuernase 37b zum Zwecke der Einleitung des Reversiervorganges die rechte Fangtasche 35bL und die Fangkante 35Lb₂, weil entweder der Reversearm 61d oder die Taste für schnellen Rücklauf (51SRL) über den Nocken 35e den Reversehebel 35 entgegen dem Uhrzeigersinn weggedrückt hat. Da der Starthebel 37 entgegen dem Uhrzeigersinn federbelastet ist, fährt die Steuernase 37b in der Führungsbahn 35LU zur unteren Verbindungsbahn 35VU und legt sich an die untere Fangkante 35cU an. In dieser Stellung hat sich der Starthebel 37 so weit entgegen dem Uhrzeigersinn verdreht, daß eine Anschlagwand 37g eine Stoprippe 31bb derart freigegeben hat, daß die Stellfeder 33 das Schaltrad 31b entgegen dem Uhrzeigersinn so weit verdrehen kann, daß die Schwungscheibenverzahnung und die Verzahnung des Schaltrades in Eingriff kommen (siehe Fig. 4b). Die Folgen dieses In-Eingriff-Kommens werden später noch beschrieben. Im Rahmen der Zurückführung der Hebel 35, 37 in ihre Ausgangsstellungen, wobei der Reversehebel 37 im Uhrzeigersinn verschwenkt, gleitet die Steuernase 37b im Rahmen der Kurve 35y nach oben und fällt hinter die linke obere Fangkante 35Lb₁. Der Starthebel 37 ist damit wieder in der linken Fangtasche 35bL gefangen.

Damit sichergestellt ist, daß die Steuernase 37b nicht in die Führungsbahn 35LO überläuft, ist die linke obere Fangkante 35Lb₁ so weit bis zu einer Ecke 35k verlängert, daß die zurücklaufende Steuernase 37b auf die linke obere Fangkante 35Lb₁ stoßen muß.

Die Bahn 35y wird also sicher durchfahren, um das Umschaltgetriebe vom NOR-Spielbetrieb in den REV-Betrieb umzuschalten.

Im REV-Spielbetrieb ist der Starthebel 37 von dem Umschalthebel 29 in dem Uhrzeigersinn belastet. Die Steuernase 37b liegt also in der Fangtasche 35bL an der oberen linken Fangkante 35Lb₂ an. Wird nun zum Umschalten vom REV-Betrieb in den NOR-Betrieb der Reversehebel 35 entgegen dem Uhrzeigersinn verschwenkt, um den Reversiervorgang einzuleiten, verläßt die Steuernase 37b die Fangtasche 35bL und fährt auf der Kurve 35x, die gestrichelt dargestellt ist, über die Bahn 35Lo nach oben und legt sich an die Fangkante 35co an. Im Zuge des Reversiervorganges ändert sich die Richtung der Kraft 37f der Starthebelfeder 30 auf den Starthebel 37, so daß die Steuernase 37b über die schräge Ebene 35ml in die Mittelstellung zurückschwenkt und an die Kante 35Lb₂ anschlägt. Der Starthebel 37 schwenkt im Zuge des Reversierens von REV nach NOR im Uhrzeigersinn zurück, sodaß die Steuernase 37b des Starthebels in die Fangtasche 35bl zurückfällt.

Wird von der NOR-Spielstellung aus der schnelle Rücklauf (SRL) gewünscht, dann wird die schnelle Rücklauftaste 51SRL gedrückt, die die Wirkrichtung der auf den Reversehebel 35 gerichteten Kraft durch Überwindung des Übertotpunktes umkehrt in eine Richtung entgegen dem Uhrzeigersinn. Das hat zur Folge, daß der Reversehebel 35 entgegen dem Uhrzeigersinn verschwenkt. Die Steuernase 37b durchfährt nun die strichpunktiert (-.-.-.) dargestellte Bahn 35z entgegen dem Uhrzeigersinn und bleibt an der Fangkante 35Cu unten rechts liegen. Hier wird jetzt der erste Reversevorgang beim schnellen Rücklauf eingeleitet. Dadurch kehrt sich die Kraft der Feder 30 auf den Starthebel um, und dessen Steuernase 37b durchfährt auf der Bahn 35z die untere rechte Führungsbahn 35mR entgegen dem Uhrzeigersinn, fällt gegen die obere rechte Fangkante 35Rb₁ und anschließend in die Fangtasche 35bR. Das Laufwerk befindet sich dann im schnellen Rücklauf.

Soll der schnelle Rücklauf beendet werden, dann fährt die SRL-Tastenstange aufgrund einer in Ausfahrrichtung wirkenden Federkraft aus. Dabei kehrt die zwischen der SRL-Taste 51 und dem Revershebel 35 wirkende wirkende Übertotpunktfeder ihre Kraftwirkung um, und der Reversehebel 35 ist nun im Uhrzeigersinn federbelastet. Er schwenkt entsprechend und die Steuernase 37b fährt aus der Fangtasche 35bR heraus und durchfährt auf der Bahn 35z die obere rechte Führungsbahn 35Ro weiter entgegen dem Uhrzeigersinn bis zur oberen Fangkante 35Co. Hier wird der zweite Reversevorgang eingeleitet. Durch den Reversevorgang kehrt sich die Kraft der Feder 30 auf den Starthebel 37 wieder um und belastet ihn entgegen dem Uhrzeigersinn. Die Steuernase 37b durchfährt nun auf der Bahn 35z die obere linke Führungsbahn 35so weiter entgegen dem Uhrzeigersinn und fällt gegen die Fangkante 35Lb₂; schließlich gleitet die Steuernase dann zurück in die linke Fangtasche 35bL. Damit ist der schnelle Rücklauf (SRL) abgeschlossen. Das Laufwerk befindet sich durch das insgesamt zweimalige Reversieren wieder in der zuvor gewählten Spielrichtung.

Wird von der REV-Spielstellung ausgehend der schnelle Rücklauf gewünscht, so durchläuft die Steuernase 37b des Starthebels 37 die Bahn 35z der Steuerkontur 35a sinngemäß entgegen den Richtungen wie oben beschrieben.

Eingeleitet wird jeder Reversiervorgang, wie beschrieben, durch ein Wegziehen des Reversehebels 35, wodurch die Steuernase 37b aus der jeweiligen Fangtasche 35bL/35bR herausfährt, so daß der Starthebel 37 verschwenken kann und die Verzahnungen der Schalträder 31a oder 31b mit den Schwungscheibenverzahnungen 3a oder 3b in Eingriff kommen.

Fig. 4a zeigt den zum Umschalten eingesetzten Umschaltmechanismus 03 mit den Schalträdern 31a, 31b, dem Starthebel 37, dem Reversehebel 35, einem Reversetaster 49 sowie den Capstanverzahnungen 3a und 3b in NOR-Wiedergabe-Stellung. Die U-förmige Starthebelfeder 30 umschlingt das Drehlager 37c des Starthebels 37. Der Schalthebel 29 hat Stifte 29s, die in Abhängigkeit von der Schalthebelstellung an jeweils einem Schenkel 30m der Starthebelfeder 30 anliegen können. Der entsprechend andere Schenkel 30m stützt sich an dem gegenüberliegenden Stift 37m des Starthebels 37 ab. Dadurch wird der Starthebel je nach momentaner Wiedergaberichtung in oder entgegen dem Uhrzeigersinn belastet. Ein Verschwenken des Starthebels 37 wird verhindert, indem seine Steuernase 37b in der Fangtasche 35bL der Steuerkontur 35a am Reversehebel 35 arretiert ist. Die beiden Schalträder 31a/b haben jeweils ein zahnloses Segment 31ad/bd. Diese zahnlosen Segmente 31ad, 31bd befinden sich in der Darstellung nach Fig. 4a im Bereich der Schwungscheibenverzahnungen 3a/b. Die Schwungscheiben können demnach frei drehen. Die Schalträder sind durch die Stellfeder 33 so belastet, daß auf das linke Schaltrad 31b ein Drehmoment entgegen dem Uhrzeigersinn und auf das rechte Schaltrad 31a ein Drehmoment im Uhrzeigersinn wirkt. Die Drehbewegung wird jedoch dadurch verhindert, daß die Enden 31e der an den Schalträdern 31a/b vorgesehenen Stoprippen 31aa/31bb an einer Anschlagkante 37g des Starthebels 37 anliegen.

Die Stoprippen 31aa/31bb erstrecken sich als Teilbögen längs der Zahnbögen der Schalträder 31a/b. Die Enden 31e der Stoprippen 31aa/31bb, die mit der Anschlagkante 37g zusammenwirken, sind dabei derart angeordnet, daß sich die zahnlosen Segmente 31ad/31bd der Schalträder 31a, 31b beim Anliegen dieser Enden 31e an der Anschlagkante 37g vor den Schwungscheibenverzahnungen 3a, 3b befinden. Damit ist der Ruhezustand des Umschaltmechanismus 03 während des Spielmodus gesichert.

Fig. 4b zeigt den Start des Reversevorganges. Der Reversehebel 35 wird, da der Reversearm 61d im Uhrzeigersinn schwenkt und gegen den Nocken 35e des Reversehebels 35 stößt, entgegen dem Uhrzeigersinn verdreht. Dadurch verläßt die Steuernase 37b des Starthebels 37 die Fangtasche 35bL des Reversehebels 35. Dies hat zur Folge, daß der Starthebel 37 entgegen dem Uhrzeigersinn unter Wirkung der Kraft 37f verschwenkt.

Fig. 4c zeigt eine weitere (spätere) Stellung des Umschaltgetriebes 03. Der Starthebel 37 ist so weit verschwenkt, daß seine Anschlagwand 37g die Stoprippe 31bb des Schaltrades 31b verläßt, wodurch dieses unter Wirkung der Kraft der Stellfeder 33 entgegen dem Uhrzeigersinn verdreht und mit der Schwungscheibenverzahnung 3b in Eingriff kommt. Das Schaltrad 31a ist weiter im Uhrzeigersinn belastet und liegt an der Anschlagwand 37g an.

Fig. 4c zeigt den nun einsetzenden Umschaltvorgang des Wickelgetriebes. Die Schwungscheibenverzahnung 3b dreht das Schaltrad 31b entgegen dem Uhrzeigersinn, wodurch dessen Stellstift 31bc gegen den Schalthebel 29 stößt und diesen entgegen dem Uhrzeigersinn umlegt. Dadurch wird auch das Schwenkgetriebe, bestehend aus dem Schwenkhebel 18, Schwenkrad 16 und dem Zwischenrad 17 von der NOR-Wiedergabestellung in die REV-Wiedergabestellung umgelegt. In Fig. 4d ist die vollzogene Umschaltung dargestellt.

Während der Umschaltbewegung des Wickelgetriebes stößt der Schalthebel 29 mit seinem rechten Stift 29s gegen den rechten Schenkel 30m der Starthebelfeder 30 und belastet den Starthebel 37 in Richtung auf seine Mittelstellung, um seine Steuernase 37b in die Fangtasche 35bL des Reversehebels 35, welcher durch weiter unten beschriebene Vorgänge wieder in seine Ursprungslage zurückfedernd belastet ist, zurückzuführen. Die Schwenkbewegung des Starthebels 37 ist aber behindert, da dessen Anschlagwand 37g gegen die Stoprippe 31bb stößt. Diese Blockierung wird erst freigegeben, nachdem der Stellstift 31bc den Schalthebel 29 in seine Endstellung gedreht hat. In dieser blockierten Stellung ist das Schaltrad 31a weiter an einer Drehbewegung gehindert, da die Stoprippe 31aa an der Anschlagwand 37g anliegt. Somit wird verhindert, daß während eines laufenden Umschaltvorganges das unbeteiligte Schaltrad 31a durch eine Fehlbedienung starten kann, da der Schalthebel 29 zwischen beiden stellstiften 31bc/ac eingeklemmt werden kann. Nach dem Auflösen der Blockierung des Starthebels 37 schwenkt diese entsprechend der Kraft der Starthebelfeder 30 weiter im Uhrzeigersinn bis die Steuernase 37b in die linke Fangtasche 35bl eingefallen ist.

Der Reversevorgang in die andere Richtung läuft entsprechend ab. Dabei dreht der Starthebel zur Einleitung des Vorganges allerdings im Uhrzeigersinn, und das Schaltrad 31a wird in die Schwungscheibenverzahnung 3a gedreht.

### Schnellauf

Antriebsmäßig unterscheidet sich der schnelle Vorlauf im Vorwärtsbetrieb (SVL-NOR) vom normalen Vorlauf im Vorwärtsbetrieb (NOR) ebenso wie der schnelle Vorlauf im Rückwärtsbetrieb (SVL-REV) vom normalen Rückwärtslauf (REV) dadurch, daß das Primärkupplungsrad 9 und das Sekundärkupplungsrad 10 der Spielkupplung über die beiden Verzahnungen 57a und 57b des Kurzschlußrades 57 miteinander verbunden sind. Dies geschieht dadurch , daß bei der Bewegung des Kopfträgers 39 (Fig. 1) von der Spielstellung in die Schnellspulstellung der Stift 58a des Kurzschlußradhebels 58 an der Schräge 39aa der Leitkontur 39a am Kopfträger 39 abgleitet. Da die Schräge 39aa einen nach links geschwungenen Bogen aufweist, dreht der Stellstift 58a den Kurzschlußradhebel 58 im Uhrzeigersinn um die Achse 58b, wodurch das Kurzschlußrad 57 mit der Spielkupplung in Eingriff kommt, d. h. das Primärkupplungsrad 9 wird mit dem Sekundärkupplungsrad 10 kurzgeschlossen. Durch das Kurzschließen der Kupplung steht am Wickel des NOR-Wickelrades 12a ein deutlich höheres Drehmoment zur Verfügung als beim normalen Wiedergabebetrieb. Dies bedeutet, daß die den Schalthebel 29 drehende Schalthebelfeder 66 kräftiger ausgelegt werden kann als dies für den Wiedergabebetrieb, bei dem die Verzahnungskräfte von der Spielkupplung begrenzt werden, notwendig wäre. Die Kraft, bei der die Verzahnung getrennt wird, kann deutlich oberhalb der Kraft im Wiedergabebetrieb liegen. Nach oben wird die zulässige Kraft durch das Moment am Primärkupplungsrad 9 begrenzt. Durch die große Spanne, die die Kraft zuläßt, ist gewährleistet, daß während des Spielbetriebes und des Schnellaufbetriebes die Verzahnung durch die Federkraft in Eingriff gehalten wird, jedoch am Bandende im Schnellaufbetrieb, wo die austreibenden Kräfte schlagartig ansteigen, getrennt wird. Dieses Kräftespiel gilt für beide Wiedergaberichtungen.

### Schneller Vorlauf

Beim schnellen Vorlauf im Vorwärtsspielbetrieb (SVL-NOR) ist es nur erforderlich, die Antriebsgeschwindigkeit des Wickelrades 12a zu erhöhen bei sonst gleichbleibender Getriebestellung. Dies geschieht durch das Anlegen des Kurzschlußrades.

### Schneller Rücklauf

Mit dem Drücken einer Taste 51SRL für schnellen Rücklauf wird der Reversehebel 35 entgegen dem Uhrzeigersinn verschwenkt, wodurch der Starthebel 37 entriegelt wird.

Gleichzeitig verdreht die SRL-Taste 51 mit einer Verriegelungsnase 51c eine Klinke 53 im Uhrzeigersinn, wodurch ein geradlinig verschiebbarer Koppelschieber 32 unter Wirkung der Kraft einer Schenkelfeder 54 nach rechts gleiten kann. (Es besteht immer eine kraftschlüssige Verbindung zwischen Klinke 53 und Koppelschieber 32, weil die Schenkelfeder 54 diese gegeneinander verspannt). Dadurch gerät dessen Verriegelungsstift 32d zwischen die Stoppwände 37d des Starthebels 37, so daß der Starthebel 37 nur um einen kleinen Bereich schwenken kann, bei dem der Reversevorgang noch nicht starten kann. (Der Starthebel 37 kann somit keines der Transporträder 31a, 31b zum Drehen freigeben.) Im weiteren Zuge der Einschubbewegung der SRL-Taste 51 gibt die Verriegelungsnase 51c der SRL-Taste die Klinke 53 wieder frei, wodurch diese durch Federkraft im Uhrzeigersinn zurückverschwenkt. Während sich die SRL-Taste 51 hinter der Nase 53d der Klinke 53 verriegelt und nicht zurückfahren kann, wird der Koppelschieber 32 von der Klinke 53 über den Klinkenansatz 32b nach links geschoben. Dadurch löst sich die Sperrung der Starthebel-Schwenkbewegung, wodurch der Starthebel 37 mit seinen schrägen Wänden 37s den Koppelschieber 32 über dessen Verriegelungsstift 32d weiter nach links zieht. Dies hat zur Folge, daß eine an ihm vorgesehene Koppelnase 32a soweit nach links gerät, daß bei dem gleich folgenden Reversiervorgang ein Entrastansatz 65a des Stellhebels 65 den Koppelschieber 32 nicht nach rechts schiebt. Die Klinke 53 wird jetzt also nicht verdreht, und die soeben gedrückte SRL-Taste bleibt eingeschoben verriegelt.

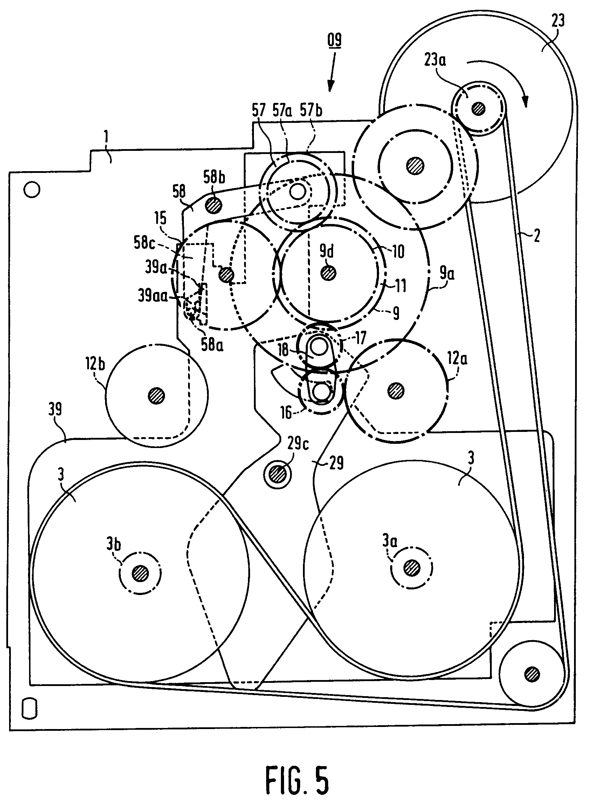

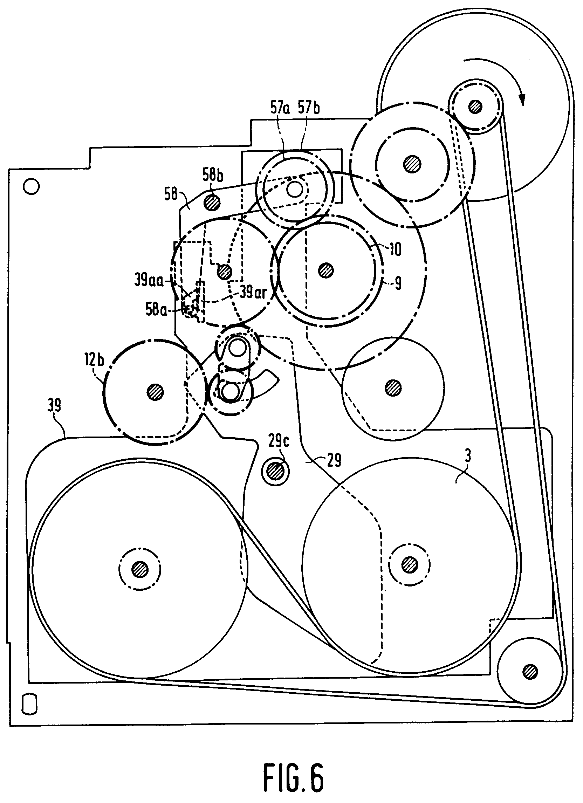

Bei dem oben inniziierten Reversevorgang über den Starthebel 37 wird das Laufwerk aus der Vorwärtsspielrichtung nach Fig. 1 und 5 in die Rückwärtsspielrichtung nach Fig. 2 und 6 umgeschaltet. Bei diesem Umlegen ist entsprechend der Darstellung nach Fig. 2 gleichzeitig das Zwischenrad 17 mit dem Reverserad 15 in Kontakt gekommen, und der Schwenkhebel 18 hat das Schwenkrad 16 an den linken Wickelteller 17b angelegt. Gleichzeitig ist der Kopfträger 39 von der Spielstellung in die Schnellspulstellung gefahren, wobei der Stellstift 58a das Kurzschlußrad 57 über den Kurzschlußradhebel 58 an die Primär- und Sekundärkupplungsräder 9, 10 angelegt hat. Der Wickelteller 12b wird damit mit einem höheren Drehmoment mit höherer Geschwindigkeit angetrieben, und das Magnetband wird mit höherer Geschwindigkeit zurückgespult.

Bei dem schnellen Rücklauf (SRL) aus dem Vorwärtsspielbetrieb (NOR) wird das Wickelgetriebe 09 auf Rücklauf umgeschaltet. Üblicherweise geschieht dies mit Hilfe eines besonderen Umschaltgetriebes. Ein solch besonderes Umschaltgetriebe erfordert aber zusätzliches Bauvolumen und zusätzliche Teile. Ein derartiges zusätzliches Umschaltgetriebe ist hier eingespart. Diese Einsparung wird möglich, indem das Laufwerk zum Zwecke des schnellen Rücklaufes so reversiert wird, als wurde die Spielrichtung geändert werden.
Der schnelle Rücklauf kann auf zwei Arten beendet werden:
A) durch Eindrücken einer SVL-Taste 52 (der jeweils nicht gedrückten anderen Schnellauftaste)
B) automatisch durch Spulen bis zum Bandende.

Grundsätzlich gilt, daß beim Beenden des schnellen Rücklaufes die Taste 51 SRL für schnellen Rücklauf ausfährt, dabei wird zum 2.Mal reversiert, sodaß die vor dem Rückspulen gültige Wiedergaberichtung wieder eingestellt wird. Der Kopfträger 39 fährt sofort wieder in die Spielstellung zurück, womit der Spielbetrieb in Vorwärts-(NOR)- oder Rückwärts-(REV)-Richtung weitergehen kann. Die Fig. 5 und 6 zeigen, da der schnelle Rücklauf immer über ein Reversieren vorgenommen wird, jeweils zwei Betriebspositionen im Schnellauf. Fig. 5 zeigt den Schnellvorlauf in Vorwärtsspielrichtung (SVL-NOR), der getriebemäßig dem schnellen Rücklauf im Reversespielbetrieb (SRL-REV) entspricht. Das Kommando für den schnellen Vorlauf wird dabei durch die Schnell-Vorlauftaste 52 SVL und das Kommando für den schnellen Rücklauf durch eine Schnell-Rücklauftaste 51SRL gegeben.

Fig. 6 zeigt die Getriebestellung für den schnellen Vorlauf im Reversebetrieb (SVL-REV) und die Getriebestellung für den schnellen Rücklauf im Vorwärtsspielbetrieb (SRL-NOR). Die Bedienung erfolgt entweder über die schnelle Vorlauftaste 52 SVL oder die schnelle Rücklauftaste 51 SRL.

### Manuelles Reversieren

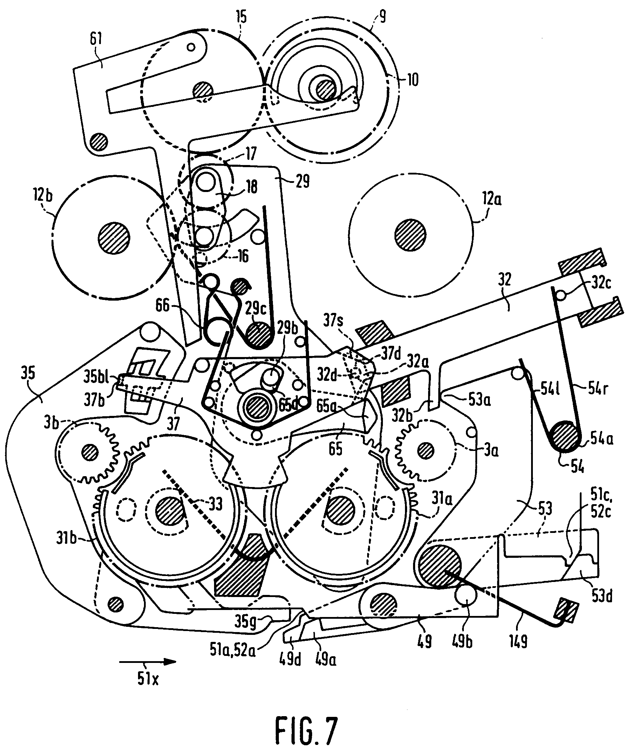

Zum manuellen Reversieren werden beide Schnellauftasten 51SRL und 52SVL gleichzeitig eingedrückt bis zu einem fühlbaren Anschlag, der der Abhebepunkt des Kopfträgers ist. Der Antriebsmotor wird ausgeschaltet. Beim anschließenden Loslassen beider Tasten wird zuerst der Motor wieder eingeschaltet, und das Reversieren beginnt. Der Vorgang wird anhand der Fig. 7 erläutert.

Fig. 7 zeigt das Wickelgetriebe 09 ohne Motor, den Steuerhebel 61, den Schalthebel 29, den Reversehebel 35 mit dem Starthebel 37, die Schwungradverzahnungen 3a und 3b, die Schalträder 31a, 31b mit der Stellfeder 33 sowie einen Reversetaster 49 in der Reverse-Wiedergabestellung. Die Schnellauftasten 52SVL und 51SRL sind nur im Bereich ihrer mit dem Reversetaster 49 und der Klinke 53 zusammenwirkenden Stellkonturen 51a/52a und 51c/52c dargestellt.

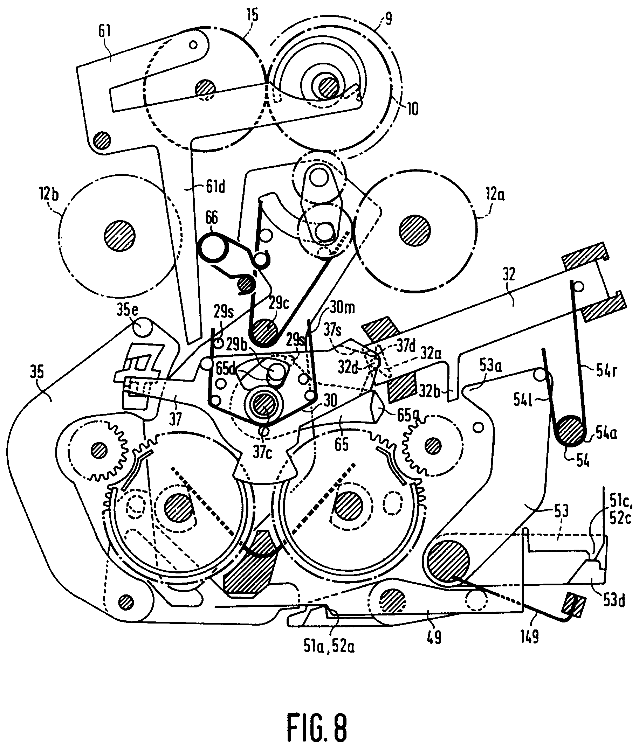

Durch das gleichzeitige Eindrücken beider Schnellauftasten gleitet ein Taststift 49a des Reversetasters 49 unter der Wirkung der Kraft einer Feder 149, die auf einen Stift 49b drückt, auf den Stellkonturen 51a, 52a ab und verschwenkt dabei im Uhrzeigersinn. Ein Reverseansatz 49d am Reversetaster 49 stößt gegen einen Tastansatz 35g des Reversehebels 35, wodurch dieser entgegen dem Uhrzeigersinn verdreht wird (Fig. 8). Dadurch wird der Starthebel 37 entriegelt und seine Steuernase 37b gleitet in die Führungsbahn 35LO, nachdem sie aus der Fangtasche 35bL herausgefahren ist; der Starthebel 37 verschwenkt aber noch nicht ganz, da durch das Einschieben der Schnellauftasten 51, 52 in Richtung des Pfeiles 51x gleichzeitig die Klinke 53 - angestoßen am Verriegelungszapfen 53d mittels Tastenverriegelungsnocken 51c/52c der Schnellauftasten 51/52 - im Uhrzeigersinn verschwenkt wird. Die Klinke 53 wird durch einen Schenkel 54L der Schenkelfeder 54, deren Wickelteil 54a im Chassis 1 gehalten ist entgegen dem Uhrzeigersinn belastet. Ein zweiter Schenkel 54r der Feder 54 stützt sich am Federlagerstift 32c eines Koppelschiebers 32 ab und schiebt diesen mit einem Klinkenansatz 32b gegen einen Koppelansatz 53a der Klinke 53. Durch das Verschwenken der Klinke 53 gleitet der Koppelschieber 32, der Nase 53d folgend, nach rechts, wodurch sein Verriegelungsstift 32d zwischen die eine Führung bildenden Stopwände 37d des Starthebels 37 gerät und diesen damit am vollständigen Verschwenken hindert (Fig. 8), so daß der Reversevorgang noch nicht starten kann. Der Schwenkwinkel reicht jedoch aus, um die Steuernase 37b, nachdem sie die Fangtasche 35BL verlassen hat, etwas in die Führungsbahn 35LO einlaufen zu lassen. Beim Loslassen der beiden SL-Tasten 51, 52 wird der Reverseansatz 49d des Reversetasters 49 den Tastansatz 35g des Reversehebels 35 verlassen und wird die Klinke 53 ebenfalls freigegeben, wodurch der Koppelschieber 32, getrieben über die Kraft von Feder 54 nach links schiebt und die Verriegelung des Starthebels aufhebt. Durch die leichte Verschwenkung des Starthebels 37 beim zuvorigen Eindrücken der SL-Tasten 51, 52 kann die Steuernase 37b des Starthebels nicht in die Fangtasche 35bL zurückfallen; der Starthebel 37 verschwenkt nun also ganz, wobei die Steuernase 37b gegen die obere Kante 35co der Führungskontur 35a stößt. Der Motor wird nun eingeschaltet. Von da ab laufen die zusammen mit dem automatischen Reversieren beschriebenen Vorgänge ab, die mit dem Freigeben des Schaltrades 31b beginnen, bei dem die Zahnung des Schaltrades 31b mit der Schwungscheibenverzahnung 3b in Eingriff kommt und schließlich der Schalthebel von der REV-Stellung in die NOR-Stellung umgelegt wird.

### Reversieren bei Bandende im Schnellauf

Um trotz fehlender Schnellaufkupplung ein Durchrutschen der Peese am Bandende zu verhindern, ist das Getriebe so ausgelegt, daß bei Erreichen einer Grenzkraft der Feder 66 das austreibend ausgelegte Getriebe von dem jeweiligen Wickelteller 12a, 12b wegschwenkt, wobei diese Schwenkbewegung zur Beendigung des Spulbetriebes ausgenutzt wird. Der wegschwenkende Schalthebel 29 nimmt mit seinem Bolzen 29b den Stellhebel 65 an dessen Langloch 65d mit (Schalthebel 29 und Stellhebel 65 drehen dabei in entgegengesetzter Richtung). Der Entrastansatz 65a des Stellhebels 65 stößt dabei gegen die Koppelnase 32a des Koppelschiebers 32. Dieser wird nach rechts verschoben und stößt dabei mit seinem Klinkenansatz 32b gegen die Koppelnase 53a der Klinke 53, wodurch die jeweils eingedrückte Schnellauftaste 51 oder 52 entrastet wird und ausfährt. Der durch das Drücken einer der Schnellauftasten in die Schnellauf-Stellung gefahrene Kopfträger 39 fährt nun vor in die Spielstellung. Das Kurzschlußrad 57 wird aus dem Eingriff mit dem Primärkupplungsrad 9 und dem Sekundärkupplungsrad 10 herausgeschwenkt. Durch die frei werdende Kupplung fällt die austreibend wirkende Verzahnungskraft, die durch die zuvor kurzgeschlossene Kupplung hoch war und zum Auseinandertreiben der Verzahnung geführt hat, zurück auf den niedrigeren im Spielbetrieb. Die rückstellende Kraft der Feder 66 auf den Schalthebel 29 ist jetzt größer als die austreibenden Verzahnungskräfte, so daß der Schalthebel 29 zurückschwenkt in die Wiedergabestellung. Das Laufwerk befindet sich somit im Wiedergabemodus. Abhängig davon, ob zuvor der schnelle Vorlauf oder der schnelle Rücklauf gewählt war, folgt jetzt ein Autoreversevorgang, oder das Laufwerk bleibt im Wiedergabemodus.

Durch die Funktion des Koppelschiebers 32 - Ausnutzung der Schwenkbewegung des Schalthebels 29 zum Entrasten der Schnellauftasten am Bandende, aber Entkopplung dieser Funktion, wenn zuvor ein Reversevorgang durch Verschwenken des Starthebels 37 gestartet wurde - wird erreicht, daß beim Drücken der SRL-Taste 51 und dem unmittelbar darauf folgendem Reversevorgang die soeben gedrückte Taste nicht gleich wieder entrastet wird. Nur wenn der Starthebel 37 nicht betätigt wurde, überträgt sich die Schwenkbewegung des Schalthebels 29 über den Koppelschieber 32 auf die Klinke 53 und entrastet die Schnellauftasten. Durch diesen Aufbau ist ein grundlegendes Problem bei Mechanismen gelöst, welche zur Ausführung des Schnellen Rücklaufes kein extra Schnellaufgetriebe verwenden, sondern dazu den ohnehin vorhandenen Reversemechanismus mitbenutzen.

## Patentansprüche

1. Magnetbandkassettengerät mit einem Laufwerk für Magnetbandkassetten, das für den Spielbetrieb mit einer ersten und einer gegenläufigen zweiten Bandlaufrichtung ausgelegt ist, wobei die Umschaltung von der ersten Bandlaufrichtung in die gegenläufige zweite Bandlaufrichtung mittels eines Umschaltmechanismus (03) erfolgt, mit dem das Wickelgetriebe (09) zwischen einem Spielmodus im Vorwärtsbetrieb und zu einem Spielmodus im Reversebetrieb umschaltbar ist, und zum Umschaltmechanismus 03 ein Schalthebel (29) gehört, der von einer ersten Stellung für die erste Spielrichtung in eine zweite Stellung für die gegenläufige zweite Spielrichtung umlegbar ist,
dadurch gekennzeichnet, daß der Schalthebel (29) mittels Schalträdern (31a, 31b) umschaltbar ist, die mit ihren Zähnen mit zugeordneten Verzahnungen (3a, 3b) der Schwungscheiben bzw. Tonwellen (3) in Eingriff bringbar sind, um den Schalthebel (29) mittels an ihnen vorgesehener Stellglieder (31bc, 31ac) von der Vorgabestellung für eine Spielrichtung in die Vorgabestellung für die gegenläufige andere Spielrichtung umzuschalten.

2. Magnetbandkassettengerät nach Anspruche 1,
dadurch gekennzeichnet, daß die Schalträder mit zahnlosen Segmenten (31ad, 31bd) versehen sind, die im jeweiligen Spielmodus (vorwärts oder reverse) im Bereich der Schwungscheibenverzahnungen (3a, 3b) gehalten werden und daß zum Umlegen des Schalthebels (29) das das Umlegen bewirkende Schaltrad (31a oder 31b) zum Drehen freigegeben wird, wobei eine Stellfeder (33) das betreffende Schaltrad (31a oder 31b) verdreht, bis die Schaltradverzahnung mit der Schwungscheibenverzahnung (3a oder 3b) in Eingriff kommt, wodurch die Schwungscheibenverzahnung in die Lage versetzt wird, das betreffende Schaltrad (31a oder 31b) zu drehen, bis ein an ihm vorgesehener Stellstift (31ac, 31bc) den Schalthebel (29) von seiner Stellung im einen Spielmodus (vorwärts oder reverse) in seine Stellung für den anderen Spielmodus (reverse oder vorwärts) über einen durch Federkraft (66) vorgegebenen Übertotpunkt umgelegt hat.

3. Magnetbandkassettengerät nach einem der Ansprüche 1 oder 2
dadurch gekennzeichnet, daß die Schalträder (31a, 31b) mit Stoprippen (31ab, 31bb) versehen sind, die mit einer Anschlagkante (37g) eines Starthebels (37) derart zusammenwirken, daß die Stoprippen (31ab, 31bb) im jeweiligen Spielmodus von der Anschlagkante (37g) blockiert sind, daß die zahnlosen Segmente (31ad, 31bd) vor den Schwungscheibenverzahnungen (3a, 3b) liegen, und daß der Starthebel (37) bei seinem von einem Umschaltkommando ausgelösten Verstellen die Stoprippe (31ab oder 31bb) des Schaltrades (31a oder 31b), das den Umschaltvorgang vornehmen soll, zum Verdrehen des betreffenden Schaltrades (31a oder 31b) freigibt.

4. Magnetbandkassettengerät nach einem der Ansprüche 1 bis 3,
dadurch gekennzeichnet, daß der Starthebel (37) gegen ein Einleiten des Umschaltvorganges gesichert ist mit Hilfe einer Steuerkontur (35a) eines Reversehebels (35), in der sich der Starthebel (37) zu seinem Verschwenken nur bewegen kann, wenn der Reversehebel (35) von einem Tastenkommando oder von einem Steuerhebel (61), der das Bandende detektieren kann, aus einer Arretierstellung gegenüber dem Starthebel (37) heraus bewegt worden ist.

5. Magnetbandkassettengerät nach einem der Ansprüche 1 bis 4,
dadurch gekennzeichnet, daß der Reversehebel (35) innerhalb der Steuerkontur (35a) Fangkanten (35bL₁, 35bL₂; 35bR₁, 35bR₂) aufweist, hinter die eine Steuernase (37b) des Starthebels (37) in den Schaltendestellungen fallen kann, um den Starthebel (37) zu blockieren, und daß die Steuernase (37b) die Fangkanten (35bL₁, 35bL₂; 35bR₁, 35bR₂) verläßt, wenn der Steuerhebel (61) den Reversehebel (35) von der jeweils beaufschlagten Fangkante so wegdrückt, daß die Steuernase in Führungsbahnen (35Lu, 35Lo, 35Ru, 35Ro) einläuft, die dem unter der Vorspannung der Schalthebelfeder (30) stehenden Starthebel (37) das Verschwenken gestattet, damit dieser das gewünschte Schaltrad (31a, 31b) freigeben kann.

6. Magnetbandkassettengerät nach einem der Ansprüche 1 bis 5,
dadurch gekennzeichnet, daß die Führungsbahnen (35Lu, 35Lo, 35Ru, 35Ruo) von den Fangkanten (35bL₁, 35bL₂; 35bR₁, 35bR₂) zu weiteren Fangkanten (35Cu, 35Co) verlaufen, die die Schwenkbewegung des Starthebels (37) begrenzen, indem die Steuernase (37b) an ihnen einen Anschlag findet.

7. Magnetbandkassettengerät nach einem der Ansprüche 1 bis 6,
dadurch gekennzeichnet, daß der um eine Drehachse (61a) schwenkbare Steuerhebel (61) einen Tastarm (61b) aufweist, der mit einem Taster (61f) eine Stirnfläche des Reverserades (15) abfährt, und einen Schaltarm (61c) mit einem Nocken (61e) aufweist, der bei sich drehendem Reverserad (15) und wickelndem Magnetband eine exzentrische Stellkontur (9b) des Primärkupplungsrades (9) pumpend abfährt und der bei stillstehendem Reverserad (15) infolge eines Bandstopps auf eine Schaltkontur (9c) aufläuft, die den Steuerhebel (61) derart verstellt, daß der Reversearm (61d) des Steuerhebels (61) den Reversehebel (35) zum Freigeben der Steuernase (37b) verstellt.
